# EUROPEAN PATENT SPECIFICATION

(11) **EP 2 416 239 B1**
(45) Date of publication and mention of the grant of the patent: **22.09.2021**
(21) Application number: 11176471.8
(22) Date of filing: 03.08.2011
(51) Int. Cl.: G06F 1/16, G06F 3/12

(54) **Controlling device mounted on portable type terminal device**
Auf tragbare Endgerätevorrichtung montierte Steuerungsvorrichtung
Contrôle de dispositif monté sur un dispositif de terminal de type portable

(30) Priority: 06.08.2010 JP 2010177339
(43) Date of publication of application: 08.02.2012
(60) Divisional application: 19177083.3
(73) Proprietor: Brother Kogyo Kabushiki Kaisha, Nagoya, Aichi 467-8561 (JP)
(72) Inventor: Sakurai, Kunihiko, Nagoya, Aichi 467-8562 (JP)
(74) Representative: J A Kemp LLP

(56) References cited:
- EP-A2- 1 469 668
- US-A1- 2007 035 917

## Description

The technique taught in the present specification relates to a controlling device mounted on a portable type terminal device such as a mobile phone, PDA (Personal Digital Assistant), portable music player, notebook PC, tablet PC, etc.

A mobile phone provided with a main body and a display capable of rotating relative to the main body is known (e.g., Japanese Patent Application Publication No. 2001-156893). In a state where the display is present in a vertical position, this mobile phone shows an image such that a left-right direction of the image is along a short side of the display and, in a state where the display is present in a horizontal position, the mobile phone shows the image such that the left-right direction of the image is along a long side of the display.

EP 1 469 668 A describes a print terminal including a memory reader for reading image data recorded in a recording medium, an image-capturing unit for capturing the image data read by the memory reader, and an image-processing unit for processing the image data captured by the image-capturing unit. The image-processing unit has a first rotation-processing function for rotating a print image to be used in printing the image data, a second rotation-processing function for rotating a print-medium image to change the orientation of a print medium to be used in printing the image data, and a third rotation function for simultaneously rotating both the print image and the print-medium image.

In the prior art, causing a printer to print the image shown in the display has not been taken into consideration. In the present specification, a technique is taught that can give a user an appropriate printout in a case where printing of an image is instructed on a portable type terminal device in which the direction of the image relative to the display can be switched.

One technique disclosed in the present application is a controlling device as defined in appended claim 1.

In the above configuration, the print medium can be obtained in which the left-right direction of the specific image is along the short side both when the print of the specific image is instructed in the first state and when the print of the specific image is instructed in the second state. That is, a print medium can be obtained in which the left-right direction of the specific image is along the short side regardless of the direction of the specific image relative to the display. Consequently, the user can be given a printout that gives him/her a standardized impression. In particular, since the left-right direction of the specific image is along the short side of the print medium, the number of pages of print medium needed for printing can be reduced compared to a configuration in which the left-right direction of the specific image is along the long side of the print medium.

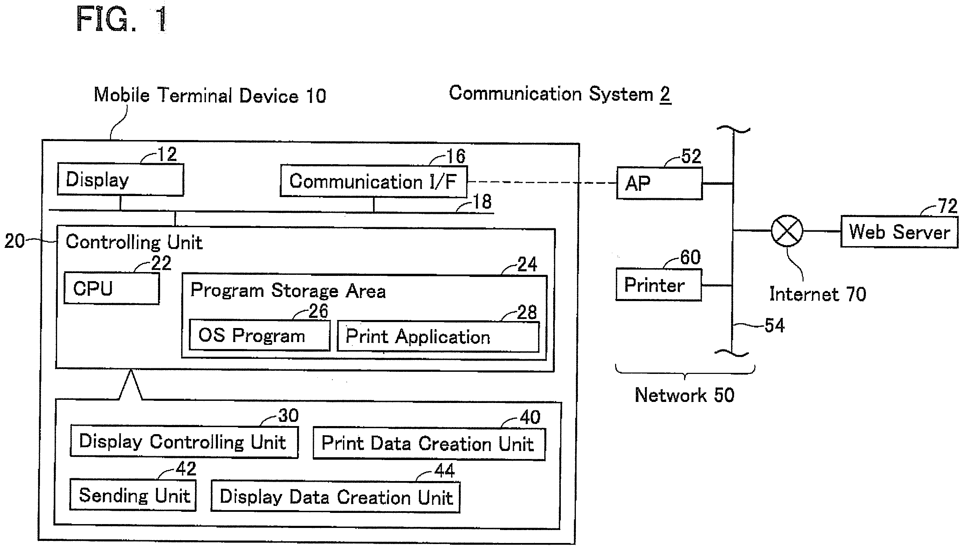

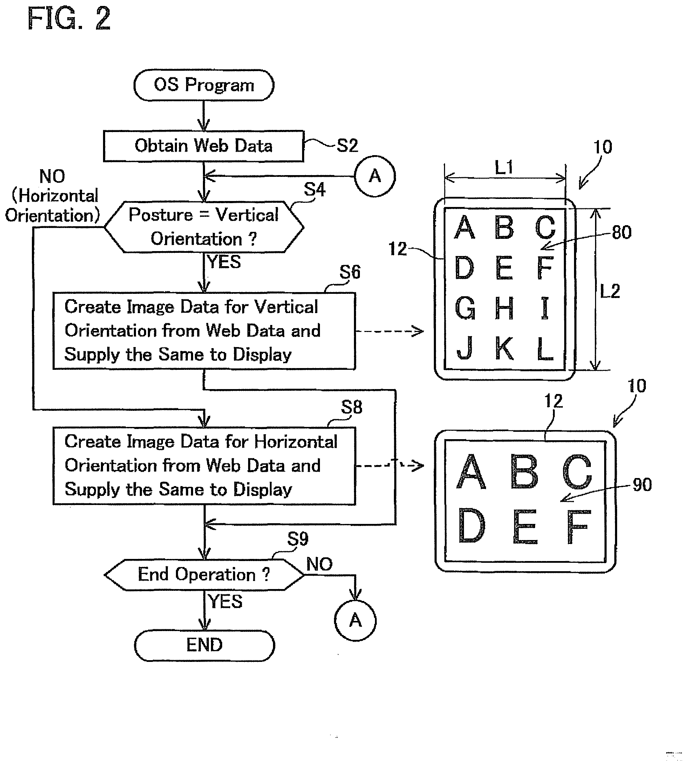

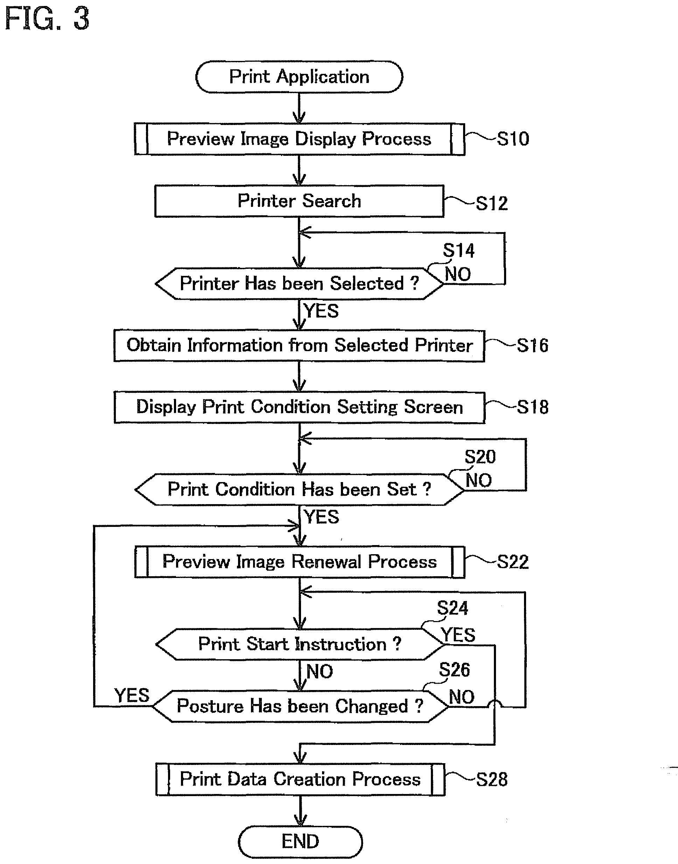

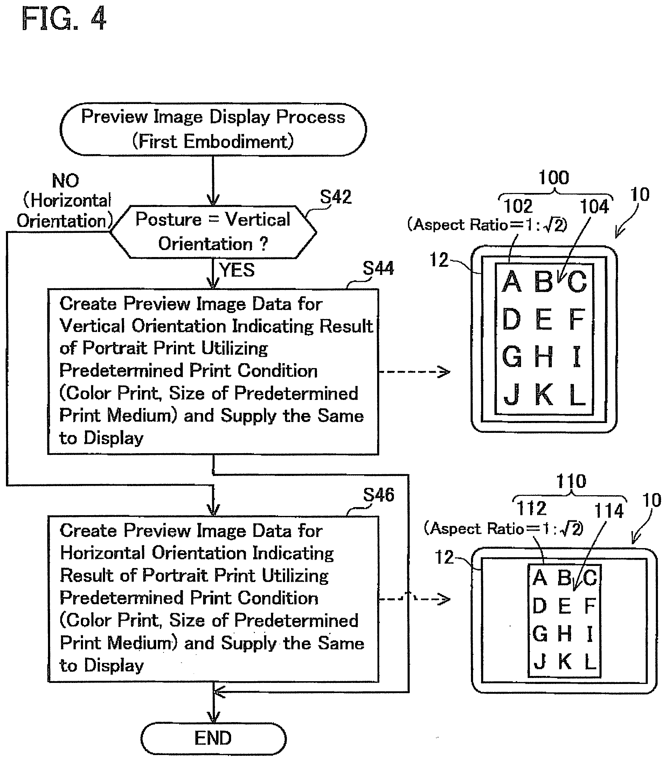

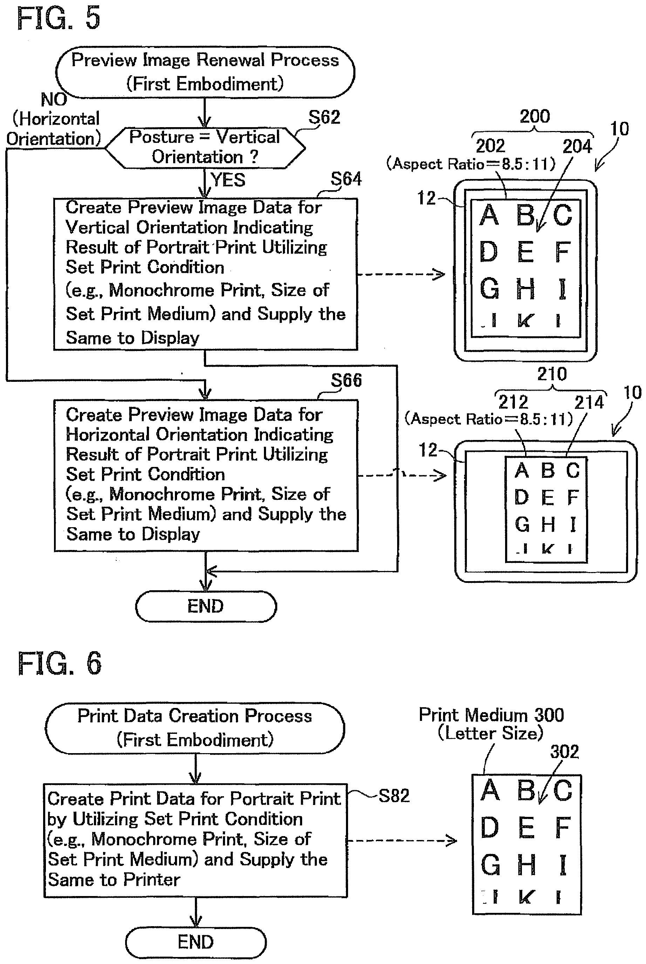

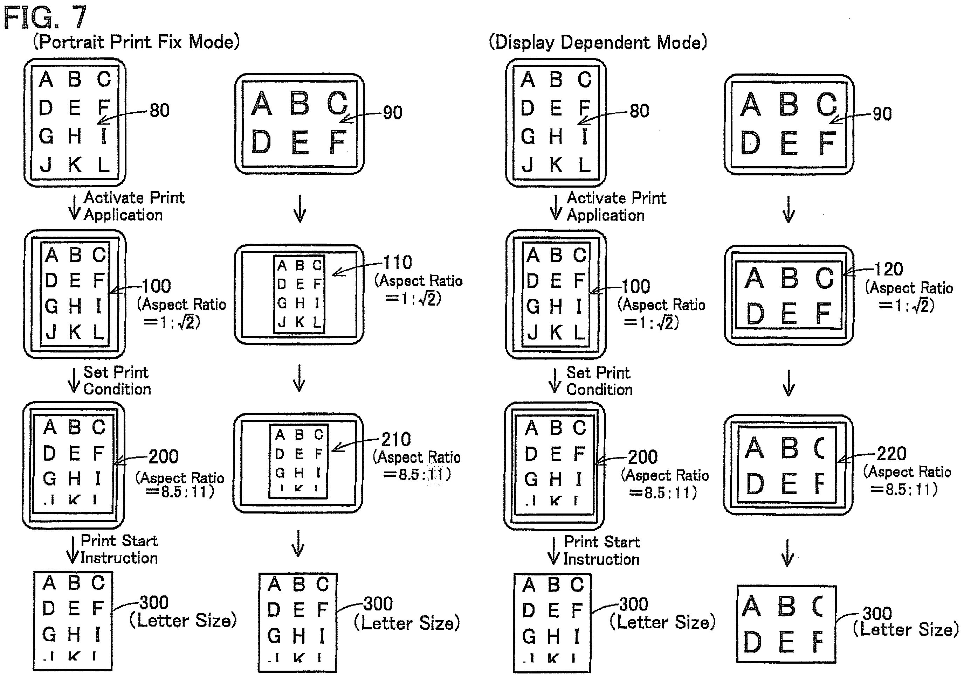

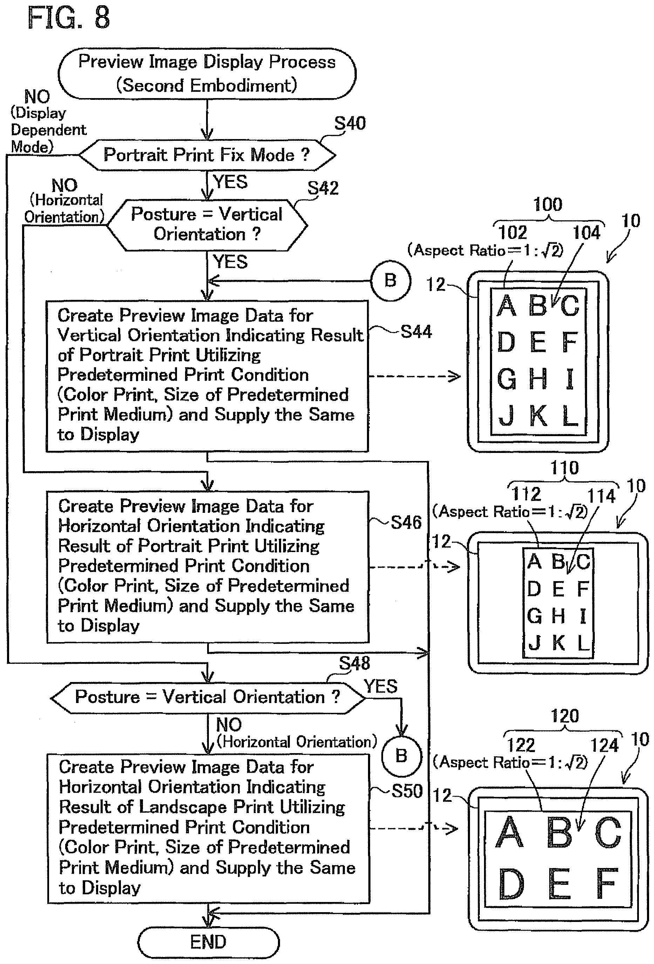

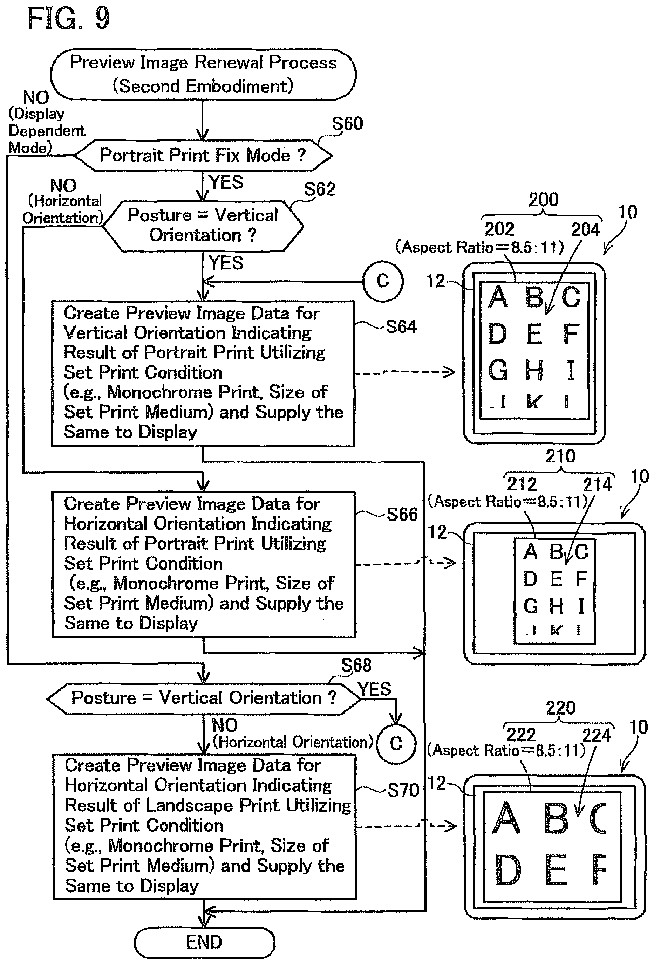

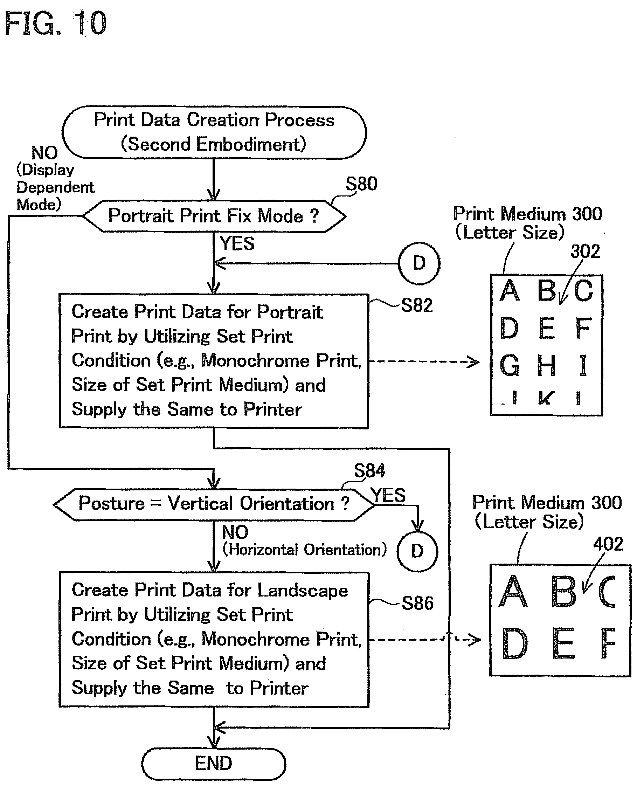

Fig. 1 shows a configuration of a communication system. Fig. 2 shows a flowchart of a process performed in accordance with an OS program. Fig. 3 shows a flowchart of a process performed in accordance with a print application. Fig. 4 shows a flowchart of a preview image display process of a first embodiment Fig. 5 shows a flowchart of a preview image renewal process of the first embodiment. Fig. 6 shows a flowchart of a print data creation process of the first embodiment. Fig. 7 shows processes until printing is performed. Fig. 8 shows a flowchart of a preview image display process of a second embodiment Fig. 9 shows a flowchart of a preview image renewal process of the second embodiment. Fig. 10 shows a flowchart of a print data creation process of the second embodiment.

### (First embodiment)

### (Configuration of system)

The first embodiment will be described with reference to the figures. As shown in Fig. 1, a communication system 2 comprises a mobile terminal device 10, a printer 60 and a Web server 72. The mobile terminal device 10 and the printer 60 are connected communicably via a network 50. The network 50 is a local area network (LAN) that is compliant with Wi-Fi (registered trademark) etc., and comprises an access point (AP) 52 and a network cable 54. The network 50 is connected with the Internet 70. The Web server 72 is connected with the Internet 70. The mobile terminal device 10 can be wirelessly connected with the network 50 via the AP 52. In this case, the mobile terminal device 10 can communicate with the printer 60 via the network 50 and, further, can communicate with the Web server 72 via the network 50 and the Internet 70.

### (Configuration of mobile terminal device 10)

The mobile terminal device 10 is a terminal device that can easily be carried by a user (i.e., a portable type terminal device). The mobile terminal device 10 is, e.g., a mobile phone, PDA, portable music player, notebook PC, tablet PC, etc. The mobile terminal device 10 comprises a display 12, a communication interface (communication I/F) 16 and a controlling unit 20. The units 12, 16,20 are connected to a bus line 18. The communication I/F 16 is an I/F for the mobile terminal device 10 to perform wireless communication.

The display 12 is a display for showing various types of information. The exterior of the mobile terminal device 10 is shown in Fig. 2. As shown in Fig. 2, the display 12 has a rectangular shape in which the length of a short side is L1 and the length of a long side is L2 (i.e., a rectangular shape in which L2 is greater than L1). Furthermore, of the two mobile terminal devices 10 shown in Fig. 2, the upper figure shows the long side of the display 12 extending along a perpendicular direction relative to the ground surface (i.e., the gravitational direction). Further, the lower figure shows the short side of the display 12 extending along the perpendicular direction relative to the ground surface (i.e., the gravitational direction). Below, the state of the upper figure in Fig. 2 may be expressed as "the posture of the mobile terminal device 10 is vertically oriented", and the state of the lower figure in Fig. 2 may be expressed as "the posture of the mobile terminal device 10 is horizontally oriented". Furthermore, the display 12 of the present embodiment is a touch panel which also functions as an operation unit operated by the user.

The controlling unit 20 comprises a CPU 22 and a program storage area 24. The CPU 22 performs various processes in accordance with programs 26, 28 stored in the program storage area 24. The function of a display controlling unit 30 is realized by the CPU 22 performing processes in accordance with the OS program 26. Further, the functions of a print data creation unit 40, a sending unit 42, and a display data creation unit 44 are realized by the CPU 22 performing processes in accordance with the print application 28. Furthermore, the OS program 26 is pre-installed in the mobile terminal device 10 at the shipment stage of the mobile terminal device 10. Further, the print application 28 is installed in the mobile terminal device 10 by, e.g., being downloaded from a server supplied by a vendor or a manufacturer of the printer 60. Furthermore, instead of the present embodiment, the print application 28 may be pre-installed in the mobile terminal device 10 at the shipment stage of the mobile terminal device 10, or may be installed in the mobile terminal device 10 from a storage medium (media) such as a CD, etc.

### (Processes performed in accordance with OS program 26)

Next, the contents of processes performed in accordance with the OS program 26 will be described with reference to Fig. 2. Furthermore, below, the description will focus on a process for showing, in the display 12, an image represented by Web data. Although the OS program 26 actually realizes various other functions, a description of those functions will be omitted.

By operating the display 12, the user can instruct the mobile terminal device 10 to access the Web server 72. In this case, in S2, the display controlling unit 30 (see Fig. 1) accesses the Web server 72, and obtains HTML (Hyper Text Markup Language) format Web data from the Web server 72.

Next, in S4, the display controlling unit 30 determines the posture of the mobile terminal device 10 based on a value detected by a posture sensor (e.g., an acceleration sensor) that is not shown and is housed in the mobile terminal device 10. Specifically, the display controlling unit 30 determines whether the mobile terminal device 10 is vertically oriented (the state of the upper figure in Fig. 2) or horizontally oriented (the state of the lower figure in Fig. 2). Furthermore, in S4, the display controlling unit 30 does not determine exactly whether the posture of the mobile terminal device 10 is vertically or horizontally oriented, but determines whether the posture of the mobile terminal device 10 is closer to vertical or horizontal. Consequently, e.g., in a state where the mobile terminal device 10 has been rotated clockwise 30 degrees from a vertically oriented posture, with the center of the display 12 being the center of rotation, the display controlling unit 30 determines YES in S4 (for being closer to the vertical orientation). Further, e.g., in a state where the mobile terminal device 10 has been rotated clockwise 60 degrees from the vertically oriented posture, with the center of the display 12 being the center of rotation, the display controlling unit 30 determines NO in S4 (for being closer to the horizontal orientation). Furthermore, in the processes below, as well, in a case where the posture of the mobile terminal device 10 is to be determined (e.g., S42 of Fig. 4, S62 of Fig. 5), the determination is performed in the same manner as S4.

In a case of YES in S4 (the case of being closer to the vertical orientation), in S6 the display controlling unit 30 creates RGB image data for vertical orientation in BMP format using the HTML format Web data obtained in S2. In Web data, the up-down direction and left-right direction of an image (the letters "A" to "L" in the example of Fig. 2) represented by the Web data (text data, image data etc.) is usually predetermined. In the present embodiment, left to right is arranged in the sequence "A", "B", "C" and up to down is arranged in the sequence "A", "D", "G", "J". That is, the up-down direction of Fig. 2 is the up-down direction of the image, and the left-right direction of Fig. 2 is the left-right direction of the image. In S6, the display controlling unit 30 creates image data for vertical orientation such that the up-down direction of the image represented by Web data is along the long side of the display 12, and the left-right direction of the image is along the short side of the display 12. Furthermore, in the present embodiment, the image data for vertical orientation is created such that the entire length in the left-right direction of an image 80 shown in the display 12 (the length from the left edge of "A" to the right edge of "C") is approximately equal to the length of the short side of the display 12.

In S6, the display controlling unit 30 further supplies the image data for vertical orientation to the display 12. Consequently, as shown in the upper figure of Fig. 2, the image 80 including the letters is shown in the display 12. Furthermore, if the user scrolls the display of the display 12 downward, instead of the letters "A" to "L", another image arranged below the letters "A" to "L" in the image data is shown in the display 12. When S6 ends, the process proceeds to S9.

In a case of NO in S4 (the case of being closer to the horizontal orientation), in S8 the display controlling unit 30 creates BMP format RGB image data for horizontal orientation using the HTML format Web data obtained in S2. In S8, the display controlling unit 30 creates the image data for horizontal orientation such that the up-down direction of the image represented by the Web data is along the short side of the display 12, and the left-right direction of the image is along the long side of the display 12. In S8, the display controlling unit 30 further supplies the image data for horizontal orientation to the display 12. Consequently, as shown in the lower figure of Fig. 2, an image 90 containing the letters is shown in the display 12.

Furthermore, in the present embodiment, the image data for horizontal orientation is created such that the entire length in the left-right direction of the image 90 shown in the display 12 (the length from the left edge of "A" to the right edge of "C") is approximately equal to the length of the long side of the display 12. Naturally, the long side of the display 12 is longer than the short side of the display 12. Consequently, the size of a partial image (e.g., the single letter "A") that constitutes the image 90 represented by the image data for horizontal orientation is greater than the size of the same partial image that constitutes the image 80 represented by the image data for vertical orientation. Therefore, as shown in the upper figure of Fig. 2, in a case where the image data for vertical orientation is supplied to the display 12, the letters "A" to "L" are shown whereas, as shown in the lower figure of Fig. 2, in a case where the image data for horizontal orientation is supplied to the display 12, only the letters "A" to "F" are shown. Furthermore, in a variant embodiment, the size of the partial image that constitutes the image 90 represented by the image data for horizontal orientation may be the same as the size of the partial image constituting the image 80 represented by the image data for vertical orientation. When S8 ends, the process proceeds to S9.

In S9, the display controlling unit 30 determines whether an operation has been performed to end the displaying of the images 80, 90 represented by the Web data in the display 12. In a case of NO here, the display controlling unit 30 returns to S4, and monitors whether the posture of the mobile terminal device 10 has changed. For example, in a case where the posture of the mobile terminal device 10 has changed from the vertical to horizontal orientation, the display controlling unit 30 determines NO in S4, creates the image data for horizontal orientation in S8, and supplies that image data to the display 12. Further, e.g., in a case where the posture of the mobile terminal device 10 has changed from horizontal to vertical orientation, the display controlling unit 30 determines YES in S4, creates the image data for vertical orientation in S6, and supplies that image data to the display 12. That is, the mobile terminal device 10 switches the direction of the images 80, 90 relative to the display 12 in accordance with the posture of the mobile terminal device 10. Furthermore, in a case of YES in S9, the displaying of the images 80, 90 represented by the Web data ends.

### (Processes performed in accordance with print application 28)

Next, the contents of processes performed in accordance with the print application 28 will be described with reference to Fig. 3. In a state where the images 80, 90 represented by the Web data are being shown in the display 12, as shown in the upper or lower figure of Fig. 2, the user can instruct the mobile terminal device 10 to initiate the print application 28 by operating the display 12. In this case, the process of Fig. 3 starts.

### (Preview image display process)

First, in S10, the display data creation unit 44 (see Fig. 1) performs a preview image display process. Fig. 4 shows a flowchart of the preview image display process. In S42, the display data creation unit 44 determines the posture of the mobile terminal device 10. In a case where the mobile terminal device 10 is vertically oriented, the display data creation unit 44 determines YES in S42, and proceeds to S44. In S44, the display data creation unit 44 creates preview image data for vertical orientation that represents a preview image indicating the result of portrait print (i.e., printing where a left-right direction of an image of a print target is along a short side of a print medium) of the image 80 represented by the Web data (see Fig. 2), and supplies the preview image data to the display 12. Consequently, a preview image 100 is shown in the display 12. The preview image 100 shows a border 102 of the print medium and an image 104 (i.e., the letters "A" to "L") corresponding to the image 80 represented by the Web data.

The contents of the process S44 will be described more specifically. Since the print condition has not yet been selected by the user at the stage of S44, the display data creation unit 44 creates the preview image data using a print condition that was determined in advance (called "predetermined print condition" below). In the present embodiment, the predetermined print condition is color print using A4 size print medium. Consequently, the display data creation unit 44 creates the preview image data such that the aspect ratio of the border 102 in the preview image 100 is 1: square root of 2, which is the aspect ratio of A4 size. Further, the display data creation unit 44 creates the preview image data such that the image 104 in the preview image 100 is a color image. Furthermore, in the present embodiment, a predetermined margin size is adopted as the predetermined print condition. The margin size of both edges of the short side of the print medium is 1/10 smaller than the length of the short side of the print medium. Consequently, the entire length of the image 104 in the left-right direction (the length from the left edge of "A" to the right edge of "C") is approximately equal to the length of the short side of the border 102. Furthermore, in a variant embodiment, no margin may be adopted as the predetermined print condition. In this variant embodiment, the entire length of the image 104 in the left-right direction matches the length of the short side of the border 102. Furthermore, as with the margins in the short side direction, the margin size of both edges of the long side of the print medium is 1/10 smaller than the length of the long side of the print medium. Consequently, the entire length in the up-down direction of the image 104 (the length from the top edge of "A" to the bottom edge of "J") is approximately equal to the length of the long side of the border 102.

In S44, further, the display data creation unit 44 creates the preview image data such that the left-right direction of the preview image 100 is along the short side of the display 12 and the up-down direction of the preview image 100 is along the long side of the display 12. Furthermore, the left-right direction of the preview image 100 corresponds to the left-right direction of the image 104 in the preview image 100 (i.e., the direction in which "A", "B", "C" are aligned), and the up-down direction of the preview image 100 corresponds to the up-down direction of the image 104 in the preview image 100 (i.e., the direction in which "A", "D", "G", "J" are aligned). Further, in S44, the display data creation unit 44 creates the preview image data such that the entirety of the preview image 100 indicating the print result for one piece of print medium fits into the display 12. Furthermore, the display data creation unit 44 creates the preview image data such that the size of the entirety of the preview image 100 increases, as long as the entirety of the preview image 100 can fit into the display 12. When S44 ends, the preview image display process ends.

On the other hand, in a case where the mobile terminal device 10 is horizontally oriented, the display data creation unit 44 determines NO in S42, and proceeds to S46. In S46, the display data creation unit 44 creates preview image data for horizontal orientation that represents a preview image indicating the result of portrait print of the image 80 represented by the Web data (see Fig. 2), and supplies that preview image data to the display 12. Consequently, a preview image 110 is shown in the display 12. The preview image 110 shows a border 112 of the print medium and an image 114 (i.e., the letters "A" to "L") corresponding to the image 80 represented by the Web data.

In S46, as in S44, the display data creation unit 44 creates the preview image data using the predetermined print condition. Consequently, the aspect ratio of the border 112 in the preview image 110 is 1: square root of 2, and the image 114 in the preview image 110 is a color image. In S46, further, the display data creation unit 44 creates the preview image data such that the left-right direction of the preview image 110 (i.e., the direction in which "A", "B", "C" are aligned) is along the long side of the display 12, and the up-down direction of the preview image 110 (i.e., the direction in which "A", "D", "G", "J" are aligned) is along the short side of the display 12. Other points are the same as in S44. When S46 ends, the preview image display process ends.

As described above, in the present embodiment, since the preview image display process is performed, the user can check the print result before the images 80, 90 shown in the display 12 are actually printed. In particular, since the preview image 100, etc. is shown, the user can check the preview image 100, etc. well before setting the print condition (i.e., immediately after the print application 28 was initiated). Further, since the entirety of the preview image 100, etc. corresponding to one piece of print medium is shown so as to fit into the display 12, it is easy for the user to check the preview image 100, etc.

### (Process following the preview image display process)

When the preview image display process ends, the process proceeds to S12 of Fig. 3. In S12, the controlling unit 20 sends a search packet to the network 50 (see Fig. 1). Consequently, the printer 60 connected with the network 50 sends a response packet to the mobile terminal device 10. In a case where another printer (not shown) is also connected with the network 50, that other printer also sends a response packet to the mobile terminal device 10. The response packet includes a node name, IP address, etc. of the source printer. The controlling unit 20 displays the node names of the printers in the display 12. The user can select the node name of one printer by operating the display 12. In this case, the controlling unit 20 determines YES in S14, and proceeds to S16. In the present embodiment, the description below will continue using the case of the node name of the printer 60 being selected.

In S16, the controlling unit 20 asks the printer 60 for the print condition executable by the printer 60. Consequently, the controlling unit 20 obtains information indicating the print condition executable by the printer 60. Furthermore, the print condition executable by the printer 60 includes, e.g., size of print medium (A4 size, Letter size, etc.), type of print medium (normal paper, glossy paper etc.), print color (color print, monochrome print), capability of duplex print, etc.

Next, in S18, the controlling unit 20 displays the print condition executable by the printer 60 in the display 12 based on the information obtained in S16. By operating the display 12, the user can set (i.e., select) the desired print condition. In this case, the controlling unit 20 determines YES in S20, and proceeds to S22. Furthermore, in the present embodiment, the description below will continue using the case of "Letter size" being set as the size of the print medium, and "monochrome print" being set as the print color.

### (Preview image renewal process)

Next, the contents of the preview image renewal process of S22 will be described. Fig. 5 shows a flowchart of the preview image renewal process. In the case where the mobile terminal device 10 is vertically oriented, the display data creation unit 44 determines YES in S62, and proceeds to S64. Except for the point that the set print condition (i.e., monochrome print, Letter size) is used, the process S64 is the same as the process S44 of Fig. 4. As a result of the process S64, a preview image 200 is shown in the display 12 instead of the preview image 100 of Fig. 4. The aspect ratio of a border 202 in the preview image 200 is 8.5:11, which is the aspect ratio of Letter size, and an image 204 in the preview image 200 is a monochrome image. Furthermore, since the aspect ratio of the print medium changes, a part of the image 204 in the preview image 200 (the part having "J", "K", "L") is lost compared to the case of the preview image display process of Fig. 4. When S64 ends, the preview image renewal process ends.

In the case where the mobile terminal device 10 is horizontally oriented, the display data creation unit 44 determines NO in S62, and proceeds to S66. Except for the point that the set print condition (i.e., monochrome print, Letter size) is used, the process S66 is the same as the process S46 of Fig. 4. The result of the process S66, which is shown in the display 12 instead of the preview image 110 of Fig. 4, is a preview image 210 indicating a border 212 having the aspect ratio 8.5:11 and an image 214 which is a monochrome image. When S66 ends, the preview image renewal process ends.

In the present embodiment, as described above, since the preview image renewal process is performed, in a case e.g. where monochrome print has been set by the user, the preview image 200, etc. indicating the print result monochrome print is displayed. Further, in a case e.g. where the size of the print medium (e.g., Letter size) has been set by the user, the preview image 200, etc. corresponding to the aspect ratio of that size is displayed. The user can check the preview image 200, etc. indicating the print result that corresponds to his desired print condition.

### (Process following the preview image renewal process)

When the preview image renewal process ends, the process proceeds to S24 of Fig. 3. In S24, the controlling unit 20 monitors whether print start has been instructed by the user. After seeing the preview image 200, etc. shown in the preview image renewal process of Fig. 5, the user can instruct print start by operating the display 12. In this case, the controlling unit 20 determines YES in S24, and proceeds to S28. Furthermore, the user can change the posture of the mobile terminal device 10 before instructing print start. The controlling unit 20 monitors whether the posture of the mobile terminal device 10 has changed (i.e., changed from closer-to-vertically-oriented state to closer-to-horizontally-oriented state, or changed from closer-to-horizontally-oriented state to closer-to-vertically-oriented state) (S26). In a case of YES here, the display data creation unit 44 performs the preview image renewal process of S22 (see Fig. 5) again. Consequently, in a case e.g. where the posture changed from the vertical to the horizontal orientation, the preview image 210 is newly displayed instead of the preview image 200.

### (Print data creation process)

Next, the contents of the print data creation process of S28 will be described. Fig. 6 shows a flowchart of the print data creation process. In S82, the print data creation unit 40 creates print data for portrait print. Further, in S82, the sending unit 42 sends the print data for portrait print with the IP address of the printer 60 obtained in S12 of Fig. 3 as the destination. Consequently, the printer 60 prints an image 302 on a print medium 300 using the print data for portrait print.

The contents of the process S82 will be described in detail. The printer 60 is usually capable of interpreting JPEG format data. Consequently, in the present embodiment, the print data creation unit 40 creates RGB bitmap data using the Web data obtained in S2 of Fig. 2, and creates JPEG format print data by compressing the bitmap data.

Further, the print data creation unit 40 creates the print data for portrait print utilizing the set print condition (i.e., monochrome print, Letter size). That is, for the printer 60 to perform the monochrome print, the print data creation unit 40 creates bitmap data such that the RGB values of the pixels constituting the bitmap data are identical. Further, for the printer 60 to perform printing on a Letter size print medium, the print data creation unit 40 creates the bitmap data having a number of pixels corresponding to the length of the short side and the length of the long side of the Letter size print medium. Further, for the printer 60 to perform a portrait print of the image 80 represented by the Web data (see Fig. 2), the print data creation unit 40 creates the bitmap data such that the left-right direction of the image 302 to be printed (i.e., the direction in which "A", "B", "C" are aligned) is along the short side of the print medium, and the up-down direction of the image 302 (i.e., the direction in which "A", "D", "G", "H" are aligned) is along the long side of the print medium. Furthermore, the print data creation unit 40 creates the bitmap data utilizing the predetermined margin size. The margin size here is the same as the case of the preview image (e.g., the margin size of the short side direction is smaller than 1/10 of the length of the short side). Consequently, the entire length of the image 302 in the left-right direction (the length from the left edge of "A" to the right edge of "C") is approximately equal to the length of the short side of the print medium 300. Furthermore, in a variant embodiment, no margin may be adopted. In this variant embodiment, the entire length of the image 302 in the left-right direction is equal to the length of the short side of the print medium 300. When S82 ends, the print data creation process ends.

### (Result of the present embodiment)

Fig. 7 shows how the image shown in the display 12 and the image printed on the print medium 300 change in accordance with the posture of the mobile terminal device 10. Furthermore, of the figures in Fig. 7, the figures corresponding to "portrait print fix mode" are realized in the first embodiment. The "display dependent mode" in Fig. 7 is utilized in a second embodiment described below. When initiation of the print application 28 is instructed with the mobile terminal device 10 being in the vertically oriented state, the preview image 100 is displayed (S44 of Fig. 4). Next, when the print condition is set, the preview image 200 is displayed (S64 of Fig. 5), and when print start is instructed, the portrait print on the print medium 300 is performed (S82 of Fig. 6). Further, when the initiation of the print application 28 is instructed with the mobile terminal device 10 being in a horizontally oriented state, the preview image 110 is displayed (S46 of Fig. 4). Next, when the print condition is set, the preview image 210 is displayed (S66 of Fig. 5), and when print start is instructed, the portrait print on the print medium 300 is performed (S82 of Fig. 6). That is, in the present embodiment, the portrait print is performed when the initiation of the print application 28 is instructed both in the state of the mobile terminal device 10 being vertically oriented and in the state of the mobile terminal device 10 being horizontally oriented.

For example, a configuration (called "comparative example mobile terminal device" below) is conceivable in which the printer 60 performs a portrait print in a case where the initiation of the print application 28 is instructed when the mobile terminal device 10 is in the vertically oriented state, and the printer 60 performs a landscape print (i.e., printing in which the left-right direction of the image of the print target is along the long side of the print medium) in a case where the initiation of the print application 28 is instructed when the mobile terminal device 10 is in the horizontally oriented state. In the comparative example mobile terminal device, the direction of the image relative to the print medium changes in accordance with the direction of the image relative to the display. Consequently, e.g., if the user instructs printing of a first image displayed when the comparative example mobile terminal device is in the vertically oriented state, and then instructs printing of a second image displayed when the comparative example mobile terminal device is in the horizontally oriented state, a first print medium (i.e., a portrait printout) can be obtained in which the left-right direction of the first image is along the short side, and a second print medium (i.e., a landscape printout) can be obtained in which the left-right direction of the second image is along the long side. For example, in a case where the first image is a top-level Web page (e.g., a top page), and the second image is a lower-level Web page linked from the top-level Web page, the direction of the top-level Web page relative to the first print medium differs from the direction of the lower-level Web page relative to the second print medium. That is, in the comparative example mobile terminal device, the direction of the image relative to the print medium is different in the first print medium and the second print medium, and the user obtains printouts which do not give him/her a standardized impression.

By contrast, in the mobile terminal device 10 of the present embodiment, the print medium 300 can be obtained in which the left-right direction of the image 80, etc. is along the short side, in both cases where the printing is instructed of the image 80 (see Fig. 2) that is shown in the mobile terminal device 10 in the vertically oriented state, and where the printing is instructed of the image 90 (see Fig. 2) that is shown in the mobile terminal device 10 in the horizontally oriented state. That is, the portrait print is performed regardless of the direction of the image 80, etc. relative to the display 12. Consequently, the user can obtain printouts which give him/her a standardized impression. In particular, since the left-right direction of the image 80, etc. is along the short side of the print medium 300; i.e., the up-down direction of the image 80, etc. is along the long side of the print medium 300, the number of pages of print medium needed for printing can be reduced compared to the configuration in which the left-right direction of the image 80, etc. is along the long side of the print medium 300 (landscape print). Further, the Web data, which is the printing target in the present embodiment, is likely to have a comparatively long data configuration in its up-down direction. Consequently, there is a clear reduction in the number of pages of print medium needed for printing. Further, in the present embodiment, since the entire length of the image 80, etc. in the left-right direction is approximately equal to the length of the short side of the print medium 300, the situation can be prevented where the entire length of the image 80, etc. in the left-right direction is significantly smaller than the length of the short side of the print medium 300 (i.e., the image 80, etc. is printed significantly smaller than the print medium). According to the present embodiment, the user can obtain an appropriate printout even if printing is instructed on the portable type terminal device 10 in which the direction of the image 80, etc. relative to the display 12 can be switched.

The "Web data" obtained in S2 of Fig. 2 is an example of the "specific data". In Fig. 7, examples of the "first case" and the "second case" are respectively the situation where the print application 28 is initiated in the state where the image 80 is shown, and the situation where the print application 28 is initiated in the state where the image 90 is shown. Further, the print data created in S82 of Fig. 6 is an example of the "first type of print data". Further, the preview image 100 and the preview image 110 of Fig. 4, and the preview image 200 of Fig. 5 are respectively examples of the "first type of a preview image", "second type of a preview image", and "third type of a preview image".

### (Second embodiment)

The description will focus on points differing from the first embodiment. In the present embodiment, there are two modes for causing the printer 60 to print using the print application 28. One of the modes (called "portrait print fix mode" below) is a mode for causing the printer 60 to print a portrait print regardless of the direction of the image relative to the display 12 (i.e., the posture of the mobile terminal device 10). The other of the modes (called "display dependent mode" below) is a mode for causing the printer 60 to print either the portrait print or the landscape print according to the direction of the image relative to the display 12 (i.e., the posture of the mobile terminal device 10). The user can select one mode out of the portrait print fix mode and the display dependent mode by operating (touching) the display 12. Information indicating the mode selected by the user is stored in a memory (not shown) in the controlling unit 20.

### (Preview image display process)

In the present embodiment, the contents of the preview image display process (Fig. 4) performed in S10 of Fig. 3 differ from the first embodiment. Fig. 8 shows a flowchart of the preview image display process of the present embodiment. In S40, the display data creation unit 44 reads the information in memory (not shown) to determine which mode, of the portrait print fix mode and the display dependent mode, has been selected by the user. In a case where the portrait print fix mode has been selected, the display data creation unit 44 determines YES in S40, and proceeds to S42. Further, in a case where the display dependent mode has been selected, the display data creation unit 44 determines NO in S40, and proceeds to S48. S42 to S46, which are performed in the case of the portrait print fix mode, are the same as S42 to S46 of Fig. 4 of the first embodiment.

### (Display dependent mode)

In S48, the display data creation unit 44 determines the posture of the mobile terminal device 10. In the case where the mobile terminal device 10 is vertically oriented, the display data creation unit 44 determines YES in S48, and proceeds to S44. In the case where the mobile terminal device 10 is horizontally oriented, the display data creation unit 44 determines NO in S48, and proceeds to S50. In S50, the display data creation unit 44 creates preview image data for horizontal orientation that represents a preview image indicating the result of landscape print of the image 90 represented by the Web data (see Fig. 2), and supplies the preview image data to the display 12. Consequently, a preview image 120 is shown in the display 12. The preview image 120 shows a border 122 of the print medium and an image 124 (i.e., the letters "A" to "F") corresponding to the image 90 represented by the Web data.

In S50, as with S44, the display data creation unit 44 creates the preview image data using the predetermined print condition (color print using A4 print medium). Consequently, the aspect ratio of the border 122 in the preview image 120 is 1: square root of 2, and the image 124 in the preview image 120 is a color image. In S50, further, the display data creation unit 44 creates the preview image data such that the left-right direction of the preview image 120 (i.e., the direction in which "A", "B", "C" are aligned) is along the long side of the display 12, and the up-down direction of the preview image 120 (i.e., the direction in which "A", "D" are aligned) is along the short side of the display 12. Furthermore, in the present embodiment, the predetermined margin size is adopted as the predetermined print condition. Consequently, the entire length of the image 124 in the left-right direction (the length from the left edge of "A" to the right edge of "C") is approximately equal to the length of the long side of the border 122. Consequently, the entire length of the image 124 in the left-right direction in the preview image 120 is greater than the entire length of the image 104 in the left-right direction in the preview image 100 shown in S44. Consequently, the size of a partial image (e.g., the single letter "A") that constitutes the image 124 in the preview image 120 is greater than the size of the same partial image that constitutes the image 104 in the preview image 100. Other points are the same as S44. When S50 ends, the preview image display process ends.

### (Preview image renewal process)

In the present embodiment, the contents of the preview image renewal process performed in S22 of Fig. 3 differ from the first embodiment. Fig. 9 shows a flowchart of the preview image renewal process of the present embodiment. In S60, the display data creation unit 44 determines which mode, of the portrait print fix mode and the display dependent mode, has been selected by the user. In a case where the portrait print fix mode has been selected, the display data creation unit 44 determines YES in S60, and proceeds to S62. Further, in a case where the display dependent mode has been selected, the display data creation unit 44 determines NO in S60, and proceeds to S68. S62 to S66, which are performed in the case of the portrait print fix mode, are the same as S62 to S66 of Fig. 5 of the first embodiment.

### (Display dependent mode)

In S68, the display data creation unit 44 determines the posture of the mobile terminal device 10. In the case where the mobile terminal device 10 is vertically oriented, the display data creation unit 44 determines YES in S68, and proceeds to S64. In the case where the mobile terminal device 10 is horizontally oriented, the display data creation unit 44 determines NO in S68, and proceeds to S70. Except for the point that the set print condition (i.e., monochrome print, Letter size) is used, the process S70 is the same as the process S50 of Fig. 8. As a result of the process S70, a preview image 220 is shown in the display 12 instead of the preview image 120 of Fig. 8. The preview image 220 has a border 222 with the aspect ratio 8. 5:11, and an image 224 which is a monochrome image. Furthermore, since the aspect ratio of the print medium changes, a part of the image 224 in the preview image 220 (the part having "C", "F") is lost compared to the case of the preview image display process of Fig. 8. When S70 ends, the preview image renewal process ends.

### (Print data creation process)

In the present embodiment, the contents of the print data creation process performed in S28 of Fig. 3 differ from the first embodiment. Fig. 10 shows a flowchart of the print data creation process of the present embodiment In S80, the print data creation unit 40 (see Fig. 1) determines which mode, of the portrait print fix mode and the display dependent mode, has been selected by the user. In the case where the portrait print fix mode has been selected, the print data creation unit 40 determines YES in S80, and proceeds to S82. S82, which is performed in the case where the portrait print fix mode has been selected, is the same as S82 of Fig. 6 of the first embodiment. Further, in the case where the display dependent mode has been selected, the print data creation unit 40 determines NO in S80, and proceeds to S84.

### (Display dependent mode)

In S84, the print data creation unit 40 determines the posture of the mobile terminal device 10. In the case where the mobile terminal device 10 is vertically oriented, the print data creation unit 40 determines YES in S84, and proceeds to S82. Consequently, the printer 60 performs a portrait print of the image 302 on the print medium 300. In the case where the mobile terminal device 10 is horizontally oriented, the print data creation unit 40 determines NO in S84, and proceeds to S86. In the process S86, the print data creation unit 40 creates print data for landscape print. Further, in S86, the sending unit 42 sends the print data for landscape print, with the IP address of the printer 60 obtained in S12 of Fig. 3 as the destination. Consequently, the printer 60 prints an image 402 on the print medium 300 utilizing the print data for landscape print.

The process S86 is fundamentally the same as the process S82. However, in order to cause the printer 60 to perform a landscape print of the image 90 represented by the Web data (see Fig. 2), the print data creation unit 40 creates bitmap data such that the left-right direction of the image 402 to be printed (i.e., the direction in which "A", "B", "C" are aligned) is along the long side of the print medium, and the up-down direction of the image 402 (i.e., the direction in which "A", "D" are aligned) is along the short side of the print medium. Furthermore, as with the process S82, since the predetermined margin is used, the entire length of the image 402 in the left-right direction (the length from the left edge of "A" to the right edge of "C") is approximately equal to the length of the long side of the print medium 300. Of course, the length of the long side of the print medium 300 is longer than the length of the short side of the print medium 300. Consequently, the entire length in the left-right direction of the image 402 obtained by landscape printing is longer than the entire length in the left-right direction of the image 302 obtained by portrait printing. Consequently, the size of the partial image (e.g., the single letter "A") that constitutes the image 402 is greater than the size of the same partialimage that constitutes the image 302.

Furthermore, in the print data created in S86, since the size of each partial image (each letter "A" etc.) is larger, only "A" to "F" is printed on the one piece of print medium 300, and "G" to "L" is not printed. Consequently, in S86, the print data creation unit 40 further creates print data for printing "G" to "L" on another piece of print medium. That is, the number of pieces of print medium required is greater in performing the process S86 than in performing the process S82. When S86 ends, the print data creation process ends.

### (Result of the present embodiment)

As shown in Fig. 7, in the display dependent mode, when the print application 28 is initiated when the mobile terminal device 10 is in the vertically oriented state, the preview image 100 is displayed (S44 of Fig. 8). Next, when the print condition is set, the preview image 200 is displayed (S64 of Fig. 9), and when print start is instructed, the portrait print is performed on the print medium 300 (S82 of Fig. 10). Further, in the display dependent mode, when the mobile terminal device 10 is in the horizontally oriented state when the initiation of the print application 28 is instructed, the preview image 120 is displayed (S50 of Fig. 8). Next, when the print condition is set, the preview image 220 is displayed (S70 of Fig. 9), and when print start is instructed, the landscape print is performed on the print medium 300 (S86 of Fig. 10). That is, in the display dependent mode, the printing can be switched between portrait print and landscape print when the initiation of the print application 28 is instructed, in accordance with the terminal device 10 having been in the vertically oriented state or the horizontally oriented state at the time of the instruction.

In the present embodiment, not only the portrait print fix mode but also the display dependent mode is adopted. Since the user can select the mode, the user can obtain the printout he/she desires. Furthermore, in the present embodiment, the print data created in S86 of Fig. 10 is an example of the "second type of the print data".

In the above embodiments, HTML was adopted as the data format of the "specific data". However, XHTML format Web data, JPEG format data, BMP format data, etc. may be adopted instead.

In the above embodiments, JPEG was adopted as the data format of the "print data". However, PS (Post Script), XPS, PDF, etc. may be adopted instead. Generally speaking, the print data may have any format that the printer is capable of interpreting. Furthermore, the print data creation unit 40 may create any print data that has a format that the printer 60 is capable of interpreting, this format being obtained as a result of an inquiry to the printer 60.

In the above embodiments, the display controlling unit 30 switches the direction of the image relative to the display 12 in accordance with the posture of the mobile terminal device 10. However, instead, the display controlling unit 30 may switch the direction of the image relative to the display 12 in a case where a predetermined button is operated. Further, the display controlling unit 30 may switch the direction of the image relative to the display 12 in a case where the display 12 moves (e.g., rotates) relative to the main body.

Furthermore, in the above embodiments, the predetermined print condition adopted e.g. in S44 of Fig. 4, etc. is a color print using A4 size print medium. However, instead, the controlling unit 20 may store the print condition each time the print condition is set by the user, and may adopt this most recently set print condition as the predetermined print condition in S44 of Fig. 4, etc.

Furthermore, the functions of the units taught in the present specification (e.g., the display controlling unit 30, the print data creation unit 40, the sending unit 42, the display data creation unit 44) may be realized by software 26, 28, as shown in the embodiment, or instead may be realized by hardware such as a logic circuit.

## Claims

1. A computer program for a portable type terminal device (10), the portable type terminal device (10) including: a display (12) having a rectangular shape defined by a long side (L2) along a first direction and a short side (LI) along a second direction, the second direction being perpendicular to the first direction; and a display controlling unit (30) configured to: in a state where the posture of the portable type terminal device (10) is vertically oriented with the long side (L2) of the display (12) extending along a perpendicular direction relative to the ground surface, create image data for vertical orientation such that the up-down direction of an image (80) represented by Web data is along the long side of the display (12), and the left-right direction of the image (80) is along the short side (L1) of the display (12), and cause the display (12) to show the image (80) represented by the Web data in the vertical orientation; and in a state where the posture of the mobile terminal device (10) is horizontally orientated with the short side (L1) of the display (12) extending along the perpendicular direction relative to the ground surface, create image data for horizontal orientation such that the up-down direction of the image (90) represented by the Web data is along the short side (L1) of the display (12), and the left-right direction of the image (90) is along the long side (L2) of the display (12) and cause the display (12) to show the image (90) represented by the Web data in the horizontal orientation,
the computer program including instructions for ordering the portable type terminal device (10) to perform:
creating display data representing a preview image (100, 110, 200, 210) indicating a print result of the image (80, 90) so as to supply the display data to the display (12) in the case where the print of the image (80, 90) is instructed;
creating print data by utilizing the Web data in the case where the print of the image (80, 90) is instructed, the print data having a format that a printer (60) is capable of interpreting; and
sending the print data to the printer (60), wherein:
in both of a first case where the print of the image (80) is instructed without designation of a print orientation in a first state and a second case where the print of the specific Web image (90) is instructed without designation of a print orientation in a second state, a first type of the print data for causing the printer (60) to perform a first type of a print is created,
the first state is a state in which the image (80) is shown in the display (12) such that the up-down direction of the image (80) is along the long side (L2), and the left-right direction of the image (80) is along the short side (LI),
the second state is a state in which the image (90) is shown in the display (L2) such that the up-down direction of the image (90) is along the short side (LI), and the left-right direction of the image (90) is along the long side (L2), and
in the first type of the print, the left-right direction of the image (80. 90) is along a short side of a print medium (300), and an entire length of the image (80. 90) in the left-right direction corresponds to the short side of the print medium (300),
wherein in the first case, a first type of the display data is supplied to the display (12), the first type of the display data being for causing a first type of the preview image (100) indicating a print result of one piece of the print medium (300) to be shown in the display (12), such that an up- down direction of the first type of the preview image (100) is along the long side (L2) of the display (12), and a left-right direction of the first type of the preview image (100) is along the short side (LI) of the display (12), the first type of the display data being data for causing an entirety of the first type of the preview image (100) to be simultaneously shown in the display (12), and
wherein in the second case, a second type of the display data is supplied to the display (12), the second type of the display data being for causing a second type of the preview image (110) indicating a print result of one piece of the print medium (300) to be shown in the display (12), such that an up-down direction of the second type of the preview image (110) is along the short side (LI) of the display (12), and a left-right direction of the second type of the preview image (110) is along the long side (L2) of the display (12), the second type of the display data being data for causing an entirety of the second type of the preview image (110) to be simultaneously shown in the display (12).

2. The computer program as in claim 1, wherein
in the first case, before a specific print condition is set by the user on the print condition setting screen, the first type of the display data is supplied to the display (12) in accordance with a predetermined print condition, and in the second case, before the specific print condition is set by the user, the second type of the display data is supplied to the display (12) in accordance with the predetermined print condition.

3. The computer program as in claim 2, including instructions for ordering the portable type terminal device (10) to perform:
after the specific print condition is set by the user on the print condition setting screen, creating a third type of the display data so as to supply the third type of the display data to the display (12), and
the third type of the display data represents a third type of the preview image (200, 210) indicating a print result of the image (80, 90) in accordance with the specific print condition.

4. The computer program as in claim 3, wherein
in the first case, before the specific print condition is set by the user on the print condition setting screen, the first type of the display data is created by utilizing a size of a predetermined print medium included in the predetermined print condition,
in the second case, before the specific print condition is set by the user on the print condition setting screen, the second type of the display data is created by utilizing the size of the predetermined print medium,
after the specific print condition is set by the user on the print condition setting screen, the third type of the display data is created by utilizing a size of a print medium set as the specific print condition.

5. The computer program as in any one of claims 1 to 4, wherein
in a state where a first mode has been selected by the user, the first type of the print data is created in both of the first case and the second case,
in a state where a second mode has been selected by the user, the first type of the print data is created in the first case, and a second type of the print data for causing the printer (60) to perform a second type of a print is created in the second case; and
in the second type of the print, the up-down direction of the image (80, 90) is along the short side of the print medium (300).

6. The computer program as in any one of claims 1 to 5, wherein
the Web data is HTML data.

7. The computer program as in any one of claims 1 to 6, wherein
in a case where an action is performed by the user in a state where the first type of the preview image (100) is shown in the display (12), the action being an action to cause the portable type terminal device (10) to be in a posture in which the short side (LI) extends along the perpendicular direction relative to the ground surface, the second type of display data is supplied to the display (12).

8. The computer program as in any one of claims 1 to 7, wherein
a print result of the image (80, 90) in accordance with the first type of the print data indicates a print result in which:
an entire length of the image (80, 90) in the left-right direction is printed along the short side of the print medium (300); and
only a length within an entire length of the image (80, 90) in the up-down direction is printed along a long side of the print medium (300), the length being a length from a top edge of the image (80, 90) and shorter than the entire length of the image in the up-down direction.

## Patentansprüche

1. Computerprogrammprodukt für ein Endgerät (10) der transportablen Art, wobei das Endgerät (10) der transportablen Art Folgendes beinhaltet: ein Display (12) mit einer rechteckigen Form, die durch eine lange Seite (L2) entlang einer ersten Richtung und eine kurze Seite (L1) entlang einer zweiten Richtung definiert ist, wobei die zweite Richtung senkrecht zur ersten Richtung liegt, und eine Display-Steuereinheit (30), die für Folgendes konfiguriert ist: in einem Zustand, in dem die Stellung des Endgeräts (10) der transportablen Art vertikal ausgerichtet ist, wobei sich die lange Seite (L2) des Displays (12) entlang einer senkrechten Richtung relativ zur Bodenoberfläche erstreckt, Erzeugen von Bilddaten für die vertikale Ausrichtung derart, dass die Auf/Ab-Richtung eines Bildes (80), das durch Web-Daten dargestellt wird, entlang der langen Seite des Displays (12) liegt und die Links/Rechts-Richtung des Bildes (80) entlang der kurzen Seite (L1) des Displays (12) liegt, und Veranlassen des Displays (12), das Bild (80), das durch Web-Daten dargestellt wird, in der vertikalen Ausrichtung anzuzeigen, und in einem Zustand, in dem die Stellung des mobilen Endgeräts (10) horizontal ausgerichtet ist, wobei sich die kurze Seite (L1) des Displays (12) entlang der senkrechten Richtung relativ zur Bodenoberfläche erstreckt, Erzeugen von Bilddaten für die horizontale Ausrichtung derart, dass die Auf/Ab-Richtung des Bildes (90), das durch Web-Daten dargestellt wird, entlang der kurzen Seite (L1) des Displays (12) liegt und die Links/Rechts-Richtung des Bildes (90) entlang der langen Seite (L2) des Displays (12) liegt, und Veranlassen des Displays (12), das Bild (90), das durch Web-Daten dargestellt wird, in der vertikalen Ausrichtung anzuzeigen,
wobei das Computerprogramm Anweisungen beinhaltet, um anzuordnen, dass das Endgerät (10) der transportablen Art Folgendes ausführt:
Erzeugen von Bilddaten, die ein Vorschaubild (100, 110, 200, 210) darstellen, das ein Druckergebnis des Bildes (80, 90) angibt, so dass die Display-Daten zu dem Display (12) geführt werden, wenn das Drucken des Bildes (80, 90) angewiesen wird,
Erzeugen von Druckdaten durch Verwenden der Web-Daten, wenn das Drucken des Bildes (80, 90) angewiesen wird, wobei die Druckdaten ein Format aufweisen, das ein Drucker (60) zu interpretieren in der Lage ist, und
Senden der Druckdaten an den Drucker (60), wobei:
sowohl in einem ersten Fall, wenn das Drucken des Bildes (80) ohne Zuweisen einer Druckausrichtung in einem ersten Zustand angewiesen wird, als auch ein einem zweiten Fall, wenn das Drucken des speziellen Web-Bildes (90) ohne Zuweisen einer Druckausrichtung in einem zweiten Zustand angewiesen wird, eine erste Art der Druckdaten erzeugt wird, um den Drucker (60) zu veranlassen, eine erste Art eines Druckens auszuführen,
der erste Zustand ein Zustand ist, in dem das Bild (80) derart auf dem Display (12) gezeigt wird, dass die Auf/Ab-Richtung des Bildes (80) entlang der langen Seite (L2) liegt und die Links/Rechts-Richtung des Bildes (80) entlang der kurzen Seite (L1) liegt,
der zweite Zustand ein Zustand ist, in dem das Bild (90) derart auf dem Display (12) gezeigt wird, dass die Auf/Ab-Richtung des Bildes (90) entlang der kurzen Seite (L1) liegt und die Links/Rechts-Richtung des Bildes (90) entlang langen Seite (L2) der liegt, und
die Links/Rechts-Richtung des Bildes (80, 90) bei der ersten Art des Druckens entlang einer kurzen Seite eines Druckmediums (300) liegt und eine gesamte Länge des Bildes (80, 90) in der Links/Rechts-Richtung der kurzen Seite des Druckmediums (300) entspricht,
wobei in dem ersten Fall eine erste Art der Display-Daten zum Display (12) geführt wird, wobei die erste Art der Display-Daten dafür vorgesehen ist, eine erste Art des Vorschaubildes (100) zu bewirken, das ein Druckergebnis eines Stücks des Druckmediums (300) angibt, das auf dem Display (12) anzuzeigen ist, so dass eine Auf/Ab-Richtung der ersten Art des Vorschaubildes (100) entlang der langen Seite (L2) des Displays (12) liegt und eine Links/Rechts-Richtung der ersten Art des Vorschaubildes (100) entlang der kurzen Seite (L1) des Displays (12) liegt, wobei die erste Art der Display-Daten Daten sind, die bewirken, dass eine Gesamtheit der ersten Art des Vorschaubildes (100) gleichzeitig auf dem Display (12) angezeigt wird, und wobei in dem zweiten Fall eine zweite Art der Display-Daten zum Display (12) geführt wird, wobei die zweite Art der Display-Daten dafür vorgesehen ist, eine zweite Art des Vorschaubildes (110) zu bewirken, das ein Druckergebnis eines Stücks des Druckmediums (300) angibt, das auf dem Display (12) anzuzeigen ist, so dass eine Auf/Ab-Richtung der zweiten Art des Vorschaubildes (110) entlang der kurzen Seite (L1) des Displays (12) liegt und eine Links/Rechts-Richtung der zweiten Art des Vorschaubildes (100) entlang der langen Seite (L2) des Displays (12) liegt, wobei die zweite Art der Display-Daten Daten sind, die bewirken, dass eine Gesamtheit der zweiten Art des Vorschaubildes (110) gleichzeitig auf dem Display (12) angezeigt wird.

2. Computerprogramm nach Anspruch 1, wobei
in dem ersten Fall, bevor durch den Benutzer auf dem Druckbedingungen-Einstellungsbildschirm eine spezielle Druckbedingung eingestellt wird, die erste Art der Display-Daten gemäß einer festgelegten Druckbedingung zu dem Display (12) geführt wird und in dem zweiten Fall, bevor durch den Benutzer die spezielle Druckbedingung eingestellt wird, die zweite Art der Display-Daten gemäß der festgelegten Druckbedingung zu dem Display (12) geführt wird.

3. Computerprogramm nach Anspruch 2, Anweisungen beinhaltend, um anzuordnen, dass das Endgerät (10) der transportablen Folgendes ausführt:
nachdem die spezielle Druckbedingung durch den Benutzer auf dem Druckbedingungen-Einstellungsbildschirm eingestellt wurde, Erzeugen einer dritten Art der Display-Daten, so dass die dritte Art der Display-Daten zu dem Display (12) geführt wird, und
wobei die dritte Art der Display-Daten eine dritte Art des Vorschaubildes (200, 210) darstellt, das ein Druckergebnis des Bildes (80, 90) gemäß der speziellen Druckbedingung anzeigt.

4. Computerprogramm nach Anspruch 3, wobei
in dem ersten Fall, bevor durch den Benutzer eine spezielle Druckbedingung auf dem Druckbedingungen-Einstellungsbildschirm eingestellt wird, die erste Art der Display-Daten durch Verwenden einer Größe eines festgelegten Druckmediums erzeugt wird, die in der festgelegten Druckbedingung enthalten ist,
in dem zweiten Fall, bevor durch den Benutzer eine spezielle Druckbedingung auf dem Druckbedingungen--Einstellungsbildschirm eingestellt wird, die zweite Art der Display-Daten durch Verwenden der Größe des festgelegten Druckmediums erzeugt wird,
nachdem durch den Benutzer die spezielle Druckbedingung auf dem Druckbedingungen-Einstellungsbildschirm eingestellt wird, die dritte Art der Display-Daten durch Verwenden einer Größe eines Druckmediums erzeugt wird, die als die spezielle Druckbedingung eingestellt ist.

5. Computerprogramm nach einem der Ansprüche 1 bis 4, wobei in einem Zustand, in dem von dem Benutzer ein erster Modus ausgewählt wurde, die erste Art der Druckdaten in sowohl dem ersten Fall als auch dem zweiten Fall erzeugt wird,
in einem Zustand, in dem von dem Benutzer ein zweiter Modus ausgewählt wurde, die erste Art der Druckdaten in dem ersten Fall erzeugt wird und eine zweite Art der Druckdaten zum Veranlassen des Druckers (60), eine zweite Art des Druckens auszuführen, in dem zweiten Fall erzeugt wird und
bei der zweiten Art des Druckens die Auf/Ab-Richtung des Bildes (80, 90) entlang der kurzen Seite des Druckmediums (300) liegt.

6. Computerprogramm nach einem der Ansprüche 1 bis 5, wobei die Web-Daten HTML-Daten sind.

7. Computerprogramm nach einem der Ansprüche 1 bis 6, wobei in einem Fall, in dem durch den Benutzer in einem Zustand, in dem die erste Art des Vorschaubildes (100) auf dem Display (12) gezeigt wird, eine Aktion durchgeführt wird, wobei die Aktion eine Aktion ist, um das Endgerät (10) der transportablen Art zu veranlassen, sich in einer Stellung zu befinden, in der sich die kurze Seite (L1) entlang der senkrechten Richtung relativ zur Bodenoberfläche erstreckt, die zweite Art von Display-Daten zu dem Display (12) geführt wird.

8. Computerprogramm nach einem der Ansprüche 1 bis 7, wobei ein Druckergebnis des Bildes (80, 90) gemäß der ersten Art der Druckdaten ein Druckergebnis angibt, bei dem:
eine gesamte Länge des Bildes (80, 90) in der Links/Rechts-Richtung entlang der kurzen Seite des Druckmediums (300) gedruckt wird und
nur eine Länge innerhalb einer gesamten Länge des Bildes (80, 90) in der Auf/AbRichtung entlang einer langen Seite des Druckmediums (300) gedruckt wird, wobei die Länge eine Länge von einem oberen Rand des Bildes (80, 90) und kürzer als die gesamte Länge des Bildes in der Auf/Ab-Richtung ist.

## Revendications

1. Programme informatique pour un dispositif terminal de type portable (10), le dispositif terminal de type portable (10) comprenant : un affichage (12) ayant une forme rectangulaire définie par un grand côté (L2) le long d'une première direction et un petit côté (L1) le long d'une deuxième direction, la deuxième direction étant perpendiculaire à la première direction ; et une unité de commande d'affichage (30) configurée pour : dans un état où la position du dispositif terminal de type portable (10) est orientée verticalement avec le côté long (L2) de l'affichage (12) s'étendant le long d'une direction perpendiculaire par rapport à la surface du sol, créer des données d'image pour une orientation verticale de telle sorte que la direction haut-bas d'une image (80) représentée par des données Web se situe le long du côté long de l'affichage (12), et la direction gauche-droite de l'image (80) se situe le long du côté court (L1) de l'affichage (12), et amener l'affichage (12) à afficher l'image (80) représentée par les données Web dans l'orientation verticale ; et dans un état où la position du dispositif terminal mobile (10) est orientée horizontalement avec le côté court (L1) de l'affichage (12) s'étendant le long de la direction perpendiculaire par rapport à la surface du sol, créer des données d'image pour une orientation horizontale de telle sorte que la direction haut-bas de l'image (90) représentée par les données Web se situe le long du côté court (L1) de l'affichage (12), et la direction gauche-droite de l'image (90) se situe le long du côté long (L2) de l'affichage (12), et amener l'affichage (12) à afficher l'image (90) représentée par les données Web dans l'orientation horizontale,
le programme informatique comprenant des instructions pour ordonner au dispositif terminal de type portable (10) d'effectuer :
la création de données d'affichage représentant une image d'aperçu (100, 110, 200, 210) indiquant un résultat d'impression de l'image (80, 90) de manière à fournir les données d'affichage à l'affichage (12) dans le cas où l'impression de l'image (80, 90) est ordonnée ;
la création de données d'impression en utilisant les données Web dans le cas où l'impression de l'image (80, 90) est ordonnée, les données d'impression ayant un format qu'une imprimante (60) est capable d'interpréter ; et
l'envoi des données d'impression à l'imprimante (60), dans lequel :
à la fois dans un premier cas où l'impression de l'image (80) est ordonnée sans désignation d'une orientation d'impression dans un premier état et dans un deuxième cas où l'impression de l'image Web spécifique (90) est ordonnée sans désignation d'une orientation d'impression dans un deuxième état, un premier type des données d'impression pour amener l'imprimante (60) à effectuer un premier type d'impression est créé,
le premier état est un état dans lequel l'image (80) est affichée sur l'affichage (12) de telle sorte que la direction haut-bas de l'image (80) se situe le long du côté long (L2), et la direction gauche-droite de l'image (80) se situe le long du côté court (L1),
le deuxième état est un état dans lequel l'image (90) est affichée sur l'affichage (L2) de telle sorte que la direction haut-bas de l'image (90) se situe le long du côté court (L1), et la direction gauche-droite de l'image (90) se situe le long du côté long (L2), et
dans le premier type d'impression, la direction gauche-droite de l'image (80, 90) se situe le long d'un côté court d'un support d'impression (300), et une longueur entière de l'image (80, 90) dans la direction gauche-droite correspond au côté court du support d'impression (300),
dans lequel dans le premier cas, un premier type des données d'affichage est fourni à l'affichage (12), le premier type des données d'affichage servant à afficher un premier type de l'image d'aperçu (100) indiquant un résultat d'impression d'un élément du support d'impression (300) sur l'affichage (12), de telle sorte qu'une direction haut-bas du premier type de l'image d'aperçu (100) se situe le long du côté long (L2) de l'affichage (12), et une direction gauche-droite du premier type de l'image d'aperçu (100) se situe le long du côté court (L1) de l'affichage (12), le premier type de données d'affichage étant des données pour provoquer l'affichage simultané d'une intégralité du premier type de l'image d'aperçu (100) sur l'affichage (12), et
dans lequel dans le deuxième cas, un deuxième type des données d'affichage sont fournies à l'affichage (12), le deuxième type des données d'affichage étant destiné à provoquer un deuxième type de l'image d'aperçu (110) indiquant une résultat d'impression d'un élément du support d'impression (300) à afficher sur l'affichage (12), de telle sorte qu'une direction haut-bas du deuxième type de l'image d'aperçu (110) se situe le long du côté court (L1) de l'affichage (12), et une direction gauche-droite du deuxième type de l'image d'aperçu (110) se situe le long du côté long (L2) de l'affichage (12), le deuxième type des données d'affichage étant des données pour provoquer l'affichage simultané d'une intégralité du deuxième type de l'image d'aperçu (110) sur l'affichage (12).

2. Programme informatique selon la revendication 1, dans lequel
dans le premier cas, avant qu'une condition d'impression spécifique ne soit définie par l'utilisateur sur l'écran de définition de condition d'impression, le premier type des données d'affichage est fourni à l'affichage (12) conformément avec une condition d'impression prédéterminée, et dans le deuxième cas, avant que la condition d'impression spécifique ne soit définie par l'utilisateur, le deuxième type des données d'affichage est fourni à l'affichage (12) conformément à la condition d'impression prédéterminée.

3. Programme informatique selon la revendication 2, comprenant des instructions pour ordonner au dispositif terminal de type portable (10) d'effectuer :
après que la condition d'impression spécifique ait été définie par l'utilisateur sur l'écran de définition de condition d'impression, la création d'un troisième type des données d'affichage de manière à fournir le troisième type des données d'affichage à l'affichage (12), et
le troisième type des données d'affichage représente un troisième type de l'image d'aperçu (200, 210) indiquant un résultat d'impression de l'image (80, 90) conformément à la condition d'impression spécifique.

4. Programme informatique selon la revendication 3, dans lequel
dans le premier cas, avant que la condition d'impression spécifique ne soit définie par l'utilisateur sur l'écran de définition de condition d'impression, le premier type des données d'affichage est créé en utilisant une taille d'un support d'impression prédéterminée incluse dans la condition d'impression prédéterminée,
dans le deuxième cas, avant que la condition d'impression spécifique ne soit définie par l'utilisateur sur l'écran de définition de condition d'impression, le deuxième type des données d'affichage est créé en utilisant la taille du support d'impression prédéterminée,
après que la condition d'impression spécifique soit définie par l'utilisateur sur l'écran de définition de condition d'impression, le troisième type des données d'affichage est créé en utilisant une taille d'un support d'impression définie comme condition d'impression spécifique.

5. Programme informatique selon l'une quelconque des revendications 1 à 4, dans lequel
dans un état où un premier mode a été sélectionné par l'utilisateur, le premier type des données d'impression est créé à la fois dans le premier cas et dans le deuxième cas,
dans un état où un deuxième mode a été sélectionné par l'utilisateur, le premier type des données d'impression est créé dans le premier cas, et un deuxième type des données d'impression pour amener l'imprimante (60) à exécuter un deuxième type d'une impression est créé dans le deuxième cas ; et
dans le deuxième type de l'impression, la direction haut-bas de l'image (80, 90) se situe le long du côté court du support d'impression (300).

6. Programme informatique selon l'une quelconque des revendications 1 à 5, dans lequel
les données Web sont des données HTML.

7. Programme informatique selon l'une quelconque des revendications 1 à 6, dans lequel
dans un cas où une action est effectuée par l'utilisateur dans un état où le premier type de l'image d'aperçu (100) est affiché sur l'affichage (12), l'action étant une action pour amener le dispositif terminal de type portable (10) dans une position dans laquelle le côté court (L1) s'étend le long de la direction perpendiculaire par rapport à la surface du sol, le deuxième type de données d'affichage est fourni à l'affichage (12).

8. Programme informatique selon l'une quelconque des revendications 1 à 7, dans lequel
un résultat d'impression de l'image (80, 90) conformément au premier type des données d'impression indique un résultat d'impression dans lequel :
une longueur entière de l'image (80, 90) dans la direction gauche-droite est imprimée le long du côté court du support d'impression (300) ; et
seule une longueur dans une longueur entière de l'image (80, 90) dans la direction haut-bas est imprimée le long d'un côté long du support d'impression (300), la longueur étant une longueur à partir d'un bord supérieur de l'image (80, 90) et plus courte que toute la longueur de l'image dans la direction haut-bas.
